# NEUE EUROPÄISCHE PATENTSCHRIFT

(11) **EP 0 545 028 B2**
(45) Veröffentlichungstag und Bekanntmachung des Hinweises auf die Entscheidung über den Einspruch: **19.07.2000**
(45) Hinweis auf die Patenterteilung: 02.01.1997
(21) Anmeldenummer: 92117072.6
(22) Anmeldetag: 06.10.1992
(51) Int. Cl.: B29C 45/17

(54) **Verfahren und Vorrichtung zum Spritzgiessen eines hohlen Kunststoffkörpers**
Method and apparatus for injection moulding a hollow plastic body
Procédé et dispositif pour mouler par injection un corps creux en matière plastique

(30) Priorität: 16.06.1992 DE 4219675; 04.12.1991 DE 9115041 U
(43) Veröffentlichungstag der Anmeldung: 09.06.1993
(73) Patentinhaber: Utescheny - Endos GmbH, D-75059 Zaisenhausen (DE)
(72) Erfinder: Utescheny, Ralf Gottfried, Dipl.-Ing., W-7519 Zaisenhausen (DE)
(74) Vertreter: Clemens, Gerhard, Dr.-Ing.

(56) Entgegenhaltungen:
- DE-A- 3 936 289
- DE-U- 9 208 068
- PATENT ABSTRACTS OF JAPAN vol. 015, no. 260 (M-1131)2. Juli 1991 & JP-A-03 087 224 (SEKISUI)
- PLASTVERARBEITER Bd. 40, Nr. 1, Januar 1989, SPEYER/RHEIN DE Seiten 14 - 18 , XP000080356 ECKARDT,EHRITT 'Mit neuem Verfahren hochwertige Formteile wirtschaftlich herstellen'
- Handbuch "Die Spritzgiesstechnik der 90er Jahre", (1991), Firma Battenfeld

## Beschreibung

Die Erfindung betrifft ein Verfahren zum Spritzgießen eines hohlen Kunststoffkörpers, bei dem Kunststoffschmelze in eine entlüftbare Formkavität getrieben wird, dann durch Einblasen von Druckgas ins Innere der Schmelze ein Hohlraum aufgeblasen wird und dann der Kunststoffkörper ausgehärtet und entformt wird, und eine Vorrichtung zur Ausübung dieses Verfahrens.

Die ausgesparten Hohlräume in solchen Kunststoffkörpern dienen nicht nur zur Einsparung von Material und Gewicht, sondern auch um sicherzustellen, daß das entformte Kunststoffteil formgerecht und nicht etwa eingefallen ist infolge der Schwundeigenschaften des verwendeten Kunststoffs.

In der WO-A-92/07697 als nicht vorveröffentlichter Stand der Technik im Sinne des Artikels 54 (3 EPÜ), ist ein Verfahren zum Spritzgießen von Teilen aus thermoplastischem Kunststoff bekannt, bei dem ein Kunststoffkörper mit einem ersten geraden Abschnitt und beidseitig anschließenden abgewinkelten zweiten Abschnitten vorhanden ist, wobei ein Hohlraum im ersten Abschnitt aufgeblasen wird und in den zweiten Abschnitten Hohlräume in Form jeweils eines Sackloches vorhanden sind. Das zum Aufblasen verwendete Druckgas wird direkt in den Hohlraum des ersten Abschnitts eingeblasen. Durch Verschiebung eines Wandungsbereiches des ersten Abschnitts während der Nachdruckphase wird die Gießform vergrößert, sodaß die dem verschobenen Wandungsbereich benachbarte schon erstarrte Haut des Thermoplastmaterials dem verschobenen Wandungsbereich folgen, an diesen unter gleichzeitiger Bildung eines Hohlraumes angepreßt wird und die noch flüssige bzw. teigige Kernmasse dieses Bereiches die Trennfugen zwischen dem geformten Kunststoffteil und diesem Bereich und dem zu dem verschobenen Wandungsteil verschobenen Thermoplastteilbereich materialschlüssig verbindet.

In der EP-A-0 289230 ist ein Verfahren zum Spritzgießen eines hohen Kunststoffkörpers und eine Vorrichtung zur Ausübung dieses Verfahrens bekannt, bei dem Kunststoffschmelze in eine entlüftbare Formkavität getrieben wird, dann durch Einblasen von Druckgas ins Innere der Schmelze ein Hohlraum aufgeblasen wird und dann der Kunststoffkörper ausgehärtet und entformt wird. Dabei wird das Gas jeweil nur in dickwandige Bereiche der Formkavität eingepreßt.

Aus der Veröffentlichung der Fa. Battenfeld, Dipl.-Ing. Helmut Eckardt: "Das Airmould-Verfahren" ist bekannt geworden, ein Verfahren zur Herstellung eines besonders großen Hohlraums eines gespritzten Kunststoff Körpers einzusetzen, beim dem während Eingasens des Gases in die Schmelze eine nachfolgende Hohlraumvergrößerung mittels eines hydraulisch verschiebbaren Kerns mit Druckgasleitung durchgeführt wird.

Es ist schwierig, wenn nicht gar unmöglich, mit bekannten Blastechniken einen stark gekrümmten Hohlraum auszusparen. Dennoch einen stark gekrümmten Kunststoffkörper hinreichend hohl zu gestalten, ist erste Aufgabe der Erfindung, die dadurch gelöst wird, daß für einen Kunststoffkörper mit einem ersten geraden Abschnitt und einem daran über einen mehr als 45° (Grad) abgewinkelten anschließenden zweiten Abschnitt ein erster Hohlraum im ersten Abschnitt aufgeblasen und ein zweiter, im zweiten Abschnitt gelegener, in Form eines Sackloches ausgebildeter Hohlraum durch ein Formteil ausgespart wird und das Druckgas zum Ausblasen des ersten Hohlraumes durch das Formteil zugeleitet wird

und mit einer oder je einer axial verschieblich in einem beziehungsweise beiden Formteilen beziehungsweise Schieberzungen gelagerten, absperrbaren Druckgaszuleitung bei in das zu bildende Sackloch ragendem Formteil beziehungsweise ragender Schieberzunge die Außenschicht der Kunststoffschmelze durchstoßen und dann Druckgas durch die geöffnete Druckgaszuleitung beziehungsweise -leitungen zum Aufblasen des ersten Hohlraums eingeblasen wird. Auf diese Weise kann der gekrümmte Kunststoffkörper auch im Bereich des Bogens hinreichend ausgehöhlt werden.

Handelt es sich bei dem Sackloch um ein solches, das mit der Achsrichtung quer zur Entformungsrichtung gelegen ist, dann empfiehlt es sich, das Sackloch durch eine Schieberzunge auszusparen.

Die Erfindung ist auch anwendbar für einen Kunststoffkörper mit einem dritten Abschnitt, der über einen zweiten Bogen dem ersten Bogen gegenüber an den ersten Abschnitt anschließt, vorzugsweise in Form eines U-förmigen Handgriffbügels. In einem solchen Fall wird vorzugsweise ein dritter im dritten Abschnitt gelegener, in Form eines Sackloches ausgebildeter Hohlraum durch ein weiteres Formteil ausgespart.

Vorteilhaft ist es, für einen U-förmigen Handgriffbügel die beiden Sacklöcher durch achsparallele und gemeinsam bewegliche Schieberzungen auszusparen.

Das zum Aufblasen des ersten Hohlraums erforderliche Druckgas wird vorteilhaft durch ein oder beide Formteile beziehungsweise Schieberzungen zugeleitet. Dann läßt sich die Einblasstelle für den angestrebten Zweck optimal positionieren und die Einstichstelle für die Druckgaszuleitung ist verdeckt im Innern des betreffenden Hohlraums.

Der Erfindung liegt weiterhin die Aufgabe zugrunde, eine Vorichtung zur Ausübung des erfinderischen Verfahrens zu schaffen. Die Erfindung löst diese Aufgabe dadurch, daß für einen Kunststoffkörper mit einem ersten geraden Abschnitt und einem daran über einen, mehr als 45° umfassenden Bogen anschließenden zweiten Abschnitt die Druckgaszuleitung für einen ersten Hohlraum im ersten Abschnitt mündet daß ein Formteil zur Aussparung eines zweiten, im zweiten Abschnitt gelegenen, in Form eines Sacklochs ausgebildeten Hohlraums vorgesehen ist und die Druckgasleitung innerhalb der Formteils verläuft und als Druckgasleitung ein Rohr vorgesehen ist, das in Richtung der Beweglichkeit der betreffenden Schieberzunge axial beweglich gegenüber der Schieberzunge gelagert ist.

Weitere Merkmale der Vorrichtung sind Gegenstand der weiteren Unteransprüche.

Die Erfindung wird nun anhand der beigefügten Zeichnung näher erläutert.

In der Zeichnung zeigt:
- Figur 1: einen Kunststoffkörper mit Teilen der zugehörigen Spritzform im Schnitt,
- Figur 2: ein zweites Ausführungsbeispiel eines Kunststoffkörpers mit Teilen der zugehörigen Spritzform im Schnitt,
- Figur 3: den Kunststoffkörper nach Figur 2 allein im Schnitt,
- Figur 4: eine Vorrichtung zum Spritzgießen eines Kunststoffkörpers nach Figur 3,
- Figur 5: den Schnitt V aus Figur 4,
- Figur 6: eine Teilansicht aus Figur 4 in einer anderen Funktionsstellung und
- Figur 7: die gleiche Teilansicht in einer weiteren Funktionsstellung.

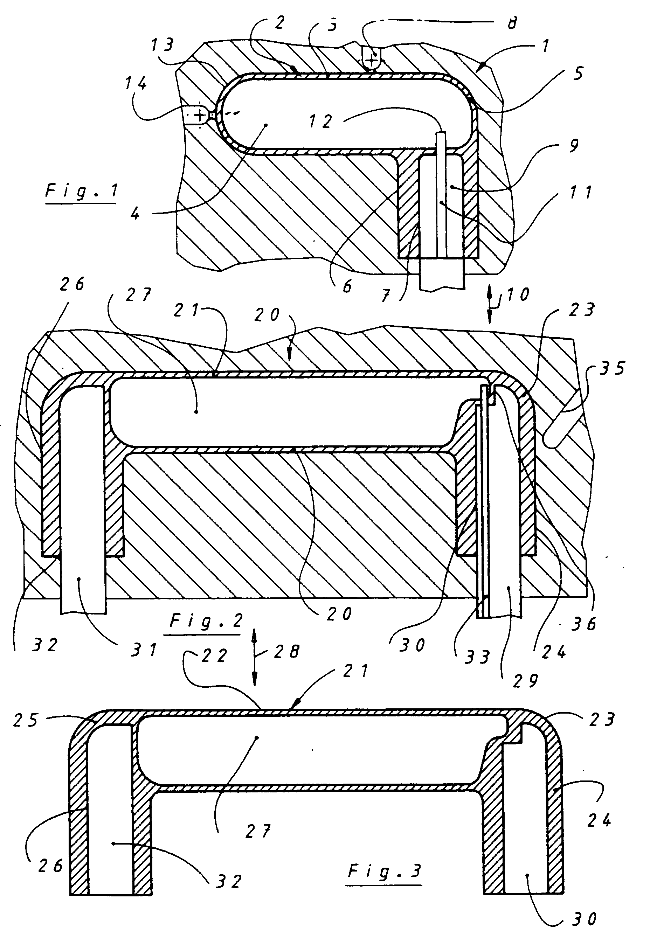

In Figur 1 ist mit 1 eine durch nicht dargestellte Mittel entlüftbare Hohlform bezeichnet, die öffenbar ist und zum Ausspritzen eines Kunststoffkörpers 2 dient. Der Kunststoffkörper 2 besteht aus einem ersten geraden Abschnitt 3 mit einem ersten Hohlraum 4 und einem daran über einen 90°-Bogen 5 anschließenden zweiten Abschnitt 6 mit einem ausgesparten Sackloch 7.

Zum Einspritzen des Kunststoffs dient die Angußdüse 8, zum Aussparen des Sacklochs 7 dient die Schieberzunge 9, die in Richtung des Doppelpfeils 10 beweglich ist. Die Entformungsrichtung steht senkrecht zur Zeichenebene.

In der Schieberzunge 9 ist eine als gerades Rohr ausgebildete Druckgaszuleitung 11 axial verschieblich in Richtung des Doppelpfeils 10 gelagert, die, ausgefahren wie in Figur 1 dargestellt, mit ihrer Mündung 12 in den zu bildenden Hohlraum 4 ragt.

Von der Formkavität 13 für den Abschnitt 3 kann eine absperrbare, in eine nicht dargestellte Aufnahmekavität führende Überschußleitung 14 ausgehen.

Zum Ausspritzen bei wie dargestellt eingefahrener Schieberzunge 9 und in die Schieberzunge zurückgezogener Druckgaszuleitung 11 wird Kunststoffschmelze in die Formkavität 13 gefüllt, und zwar nach einer ersten Verfahrenstechnik im Überschuß. Nachdem die in Figur 1 gezeichneten Wandungen des Kunststoffteils angehärtet sind, wird bei wie dargestellt ausgefahrener Druckgaszuleitung 11 der Hohlraum 4 ausgeblasen, indem die in diesem enthaltene, noch fließfähige Seele der Kunststoffschmelze bei zu diesem Zweck geöffneter Überschußleitung 14 ausgestoßen wird.

Nach einer anderen Verfahrenstechnik ist die Überschußleitung 14 unnötig beziehungsweise bleibt verschlossen und es wird nur die erforderliche Menge Kunststoffschmelze eingefüllt und diese dann zu der endgültigen Form aufgeblasen.

Bei beiden Verfahrenstechniken wird vor dem Entformen des ausgehärteten Kunststoffkörpers 2 die Schieberzunge 9 mit der Druckgaszuleitung 11 aus dem Sackloch 7 zurückgezogen.

Bei dem Ausführungsbeispiel nach Figur 2 ist die Hohlform mit 20 bezeichnet. Diese ist geeignet zur Herstellung eines Kunststoffkörpers 21, der aus einem ersten Abschnitt 22, einem daran über einen 90°-Bogen 23 anschließenden zweiten Abschnitt 24 und einem an der gegenüberliegenden Seite über einen 90°-Bogen 25 anschließenden dritten Abschnitt 26 besteht. Der Abschnitt 22 ist geradlinig und langgestreckt, die Abschnitte 24 und 26 sind geradlinig und achsparallel, so daß eine U-förmige Gestalt in Form eines Griffbügels, wie besonders gut aus Figur 3 ersichtlich, entsteht.

Im ersten Abschnitt 22 ist ein durch Ausblasen hervorgerufener Hohlraum 27 vorgesehen. Im zweiten Abschnitt 24 ist ein durch eine in Pfeilrichtung 28 bewegliche Schieberzunge 29 ausgespartes erstes Sackloch 30 vorgesehen. Im dritten Abschnitt 26 ist ein durch eine zweite Schieberzunge 31 ausgespartes Sackloch 32 vorgesehen. Die beiden Schieberzungen 29 und 31 sind achsparallel beweglich und werden mit einem gemeinsamen, nicht dargestellten Schieber betätigt.

In der Schieberzunge 29 ist eine Druckgaszuleitung 33 in Form eines geraden Rohres koaxial zur Schieberzunge in dieser längsbeweglich gelagert. Mit 35 ist ein Anguskanal bezeichnet. In der Nähe der Mündung des Anguskanals 35 mündet die, wie dargestellt in Funktionsstellung ausgefahrene Druckgaszuleitung 33, und zwar in einer an der Stirnseite der betreffenden Schieberzunge 29 ausgesparten Stufe 36, die dem zu bildenden Hohlraum 27 zugekehrt ist.

Bei eingefahrenen Schieberzungen 29, 31 und in den Schieber zurückgezogener Druckgaszuleitung 33 wird die für den Kunststoffkörper benötigte Portion von Kunststoffschmelze über den Anguskanal 35 eingefüllt und dann bei ausgefahrener Druckgaszuleitung 33 zum fertigen Kunststoffkörper aufgeblasen. Dann wird die Druckgaszuleitung in die Schieberzunge 29 zurückgezogen, die beiden Schieberzungen 29, 31 werden aus den Sacklöchern 30 und 32 zurückgezogen und der Kunststoffkörper 21 wird entformt in Entformungsrichtung senkrecht zur Zeichenebene der Figur 2.

Alternativ ist auch entsprechend die im Text zu Figur 1 zuerst erläuterte Verfahrenstechnik mit Überschuß in Verbindung mit Figur 2 anwendbar, wobei dann allerdings zusätzlich noch eine der Überschußleitung 14 entsprechende Überschußleitung dem Anguskanal 35 gegenüber vorgesehen ist.

Alternativ können, wenn dies die Entformungsrichtung zuläßt, statt der Schieberzungen Formteile vorgesehen sein, die fest mit der Hohlform 1 beziehungsweise 20 verbunden sind.

Alternativ können, wenn dies die Entformungsrichtung zuläßt, auch ein oder mehrere feststehende Druckgaszuleitungen vorgesehen sein, die fest mit der Hohlform 1 beziehungsweise 20 verbunden sind.

Alternativ kann auch in der zweiten Schieberzunge 31 spiegelsymmetrisch zur ersten Schieberzunge 29 eine zweite Druckgaszuleitung axial verschieblich, vorzugsweise in Verbindung mit einer Stufe vorgesehen sein, die dann parallel zur ersten Druckgaszuleitung betrieben wird.

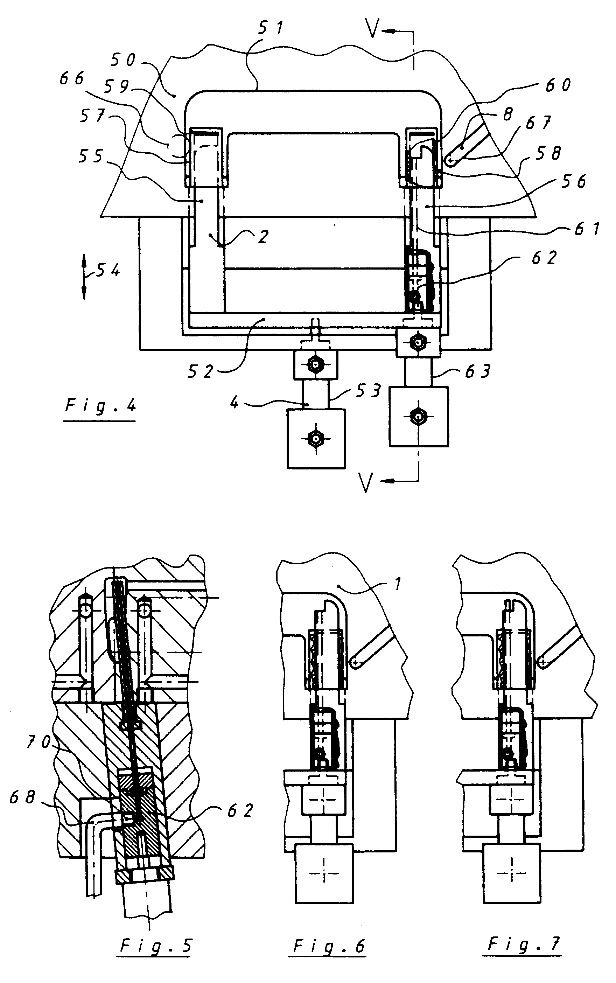

In Figur 4 sind detaillierter die Teile einer Vorrichtung zum Spritzen eines Kunststoffkörpers 21 - vergleiche Figur 3 - in Ausgangsstellung dargestellt. Mit 50 ist die Kunststoff-Form bezeichnet, in der eine Formkavität 51 ausgespart ist, die die Grundform eines U-förmigen Griffbügels hat. Mit 52 ist ein von einem Vorschubantrieb 53 in Richtung des Doppelpfeils 54 beweglicher Schieber bezeichnet, der mit zwei Schieberzungen 55, 56 ausgestattet ist. Diese zwei Zungen sind abgedichtet in die offenen Enden 57, 58 der Formkavität 51 einfahrbar. Die zugehörigen Abdichtungen sind mit 59 und 60 bezeichnet.

In der Schieberzunge 56 ist ein gerades Rohr 61 längsverschieblich in Pfeilrichtung 54 gelagert, das über ein nicht dargestelltes Absperrventil an eine äußere Druckgasversorgung anschließbar ist. Das Absperrventil ist in der in Figur 4 gezeigten Ausgangsstellung der Teile geschlossen und in der in Figur 7 gezeigten Stellung der Teile geöffnet.

Das Rohr 61 und mit ihm der Ventilkörper des Absperrventils 62 werden verschoben durch einen zweiten am Schieber 52 gelagerten Verschiebeantrieb 63. Die beiden Verschiebeantriebe 53 und 63 sind im Ausführungsbeispiel hydraulisch ausgestaltet. Andere Ausgestaltungen, zum Beispiel mechanische oder elektrische, sind möglich.

In die Formkavität 51 mündet an der durch den strichpunktierten Kreis 66 in Figur 4 angedeuteten Stelle eine Anspritzleitung 67, mit der Kunststoffschmelze in die Formkavität eingetrieben und überschüssige Kunststoffschmelze auch wieder abgeleitet werden kann. Zum Ableiten der überschüssigen Kunststoffschmelze kann aber auch eine besondere absperrbare Überschußleitung entsprechend der Überschußleitung 14 aus Figur 1 vorgesehen sein.

Zum Spritzgießen werden die Teile in die in Figur 6 gezeichnete Stellung gebracht, in der die Schieberzungen 55 und 56 vorgeschoben sind, in eine an den auszusparenden Hohlraum angrenzende Stellung. Ist das geschehen, dann wird die Formkavität 51 vollständig mit Kunststoffschmelze gefüllt. Nun wird das Rohr 61 in die in Figur 7 gezeigte Stellung ausgefahren und Druckgas in die Formkavität 51 eingeblasen, und zwar in den Bereich des gewünschten auszusparenden Hohlraums, wodurch die dort befindliche überschüssige weiche Kunststoffseele wieder ausgetrieben wird.

Wichtig ist, daß das erst geschieht, nachdem die die Schieberzungen 55, 56 umgebenden Wandungen 72, 73 - vergleiche Figur 3 - ausgehärtet sind. Auf diese Weise ist sichergestellt, daß die Innenseiten dieser Wandungen durch die Außenform der Schieberzungen definiert sind und nicht in ihrer Gestaltung gewissen Zufälligkeiten unterliegen, wie die Innenseiten der Wandungen des Hohlraums.

Nach dem Ausdrücken der Kunststoffseele wird das Absperrventil für das Druckgas geschlossen und dann das Rohr 61 zurückgezogen. Anschließend wird der Schieber 52 durch den Vorschubantrieb 53 zurückgefahren in die Ausgangsstellung gemäß Figur 4, in der nun der fertige Kunststoffkörper entformt werden kann.

Alternativ kann wie im Text zu Figur 2 beschrieben, auch ohne Überschuß gespritzt werden. Dann ist die der Überschußleitung 14 entsprechende Überschußleitung überflüssig oder bleibt ständig geschlossen.

## Patentansprüche

1. Verfahren zum Spritzgießen eines hohen Kunststoffkörpers (2), bei dem Kunststoffschmelze in eine entlüftbare Formkavität (13) getrieben wird, dann durch Einblasen von Druckgas ins Innere der Schmelze ein Hohlraum (4) aufgeblasen wird und dann der Kunststoffkörper (2) ausgehärtet und entformt wird,
**dadurch gekennzeichnet**, daß
- für einen Kunststoffkörper (2) mit einem ersten geraden Abschnitt (3) und einem daran über einen mehr als 45° (Grad) abgewinkelten anschließenden zweiten Abschnitt (6) ein erster Hohlraum (4) im ersten Abschnitt (3) aufgeblasen und ein zweiter, im zweiten Abschnitt (6) gelegener, in Form eines Sackloches (7) ausgebildeter Hohlraum durch ein Formteil (9) ausgespart wird und das Druckgas zum Aufblasen des ersten Hohlraumes (4) durch das Formteil (9) zugeleitet wird,
mit einer oder je einer axial verschieblich in einem bzw. beiden Formteilen bzw. Schieberzungen (9, 29) gelagerten, absperrbaren Druckgaszuleitung (11, 33) bei in das zu bildende Sackloch (7, 30) ragendem Formteil bzw. ragender Schieberzunge die Außenschicht der Kunststoffschmelze durchstoßen und dann Druckgas durch die geöffnete Druckgaszuleitung (11, 33) bzw. -leitungen zum Aufblasen des ersten Hohlraums (4, 27) eingeblasen wird.

2. Verfahren nach Anspruch 1,
**dadurch gekennzeichnet**, daß
- für einen Kunststoffkörper (2) mit der Achsrichtung des Sackloches (7) quer zur Entformungsrichtung das Sackloch (7) durch eine Schieberzunge (9) ausgespart wird.

3. Verfahren nach Anspruch 1 oder 2,
**dadurch gekennzeichnet**, daß
- für einen Kunststoffkörper mit einem weiteren dritten Abschnitt (26), der über einen zweiten Bogen (25) dem ersten Bogen (23) gegenüber an den ersten Abschnitt (22) anschließt, vorzugsweise in Form eines U-förmigen Handgriffbügels, ein dritter im dritten Abschnitt (26) gelegener, in Form eines Sackloches ausgebildeter Hohlraum (32) durch ein weiteres Formteil (31) ausgespart wird.

4. Verfahren nach Anspruch 3,
**dadurch gekennzeichnet**, daß
- für einen U-förmigen Handgriffbügel die beiden Sacklöcher (30, 32) durch achsparallele und gemeinsam bewegliche Schieberzungen (29, 31) ausgespart werden.

5. Verfahren nach einem der Ansprüche 2 oder 4,
**dadurch gekennzeichnet**, daß
- das Druckgas zum Aufblasen des ersten Hohlraums (4, 27) durch beide Formteile (9, 29, 31) beziehungsweise Schieberzungen zugeleitet wird.

6. Vorrichtung zum Spritzen eines hohlen Kunststoffkörpers (21)
- mit einer entlüftbaren und öffenbaren Hohlform (20)
- mit einer in die Formkavität dieser Hohlform (20) mündenden Zuleitung (35) für Kunststoffschmelze,
- mit einer in diese Formkavität mündenden Zuleitung (35) für Druckgas zum Aufblasen eines Hohlraums (27) im Innern der Schmelze, zur Ausübung nach einem der vorhergehenden Verfahrensansprüche,
**dadurch gekennzeichnet**, daß
- für einen Kunststoffkörper (21) mit einem ersten geraden Abschnitt (22) und einem daran über einen, mehr als 45° abgewinkelten anschließenden zweiten Abschnitt (24) die Druckgaszuleitung (33) für einen ersten Hohlraum (27) im ersten Abschnitt mündet
- ein Formteil (29) zur Aussparung eines zweiten, im zweiten Abschnitt gelegenen, in Form eines Sacklochs (30) ausgebildeten Hohlraum vorgesehen ist und die Druckgasleitung innerhalb des Formteils (29) verläuft,
- als Druckgaszuleitung ein Rohr (33, 61) vorgesehen ist, das in Richtung der Beweglichkeit der betreffenden Schieberzunge (55, 56) axial beweglich gegenüber der Schieberzunge gelagert ist.

7. Vorrichtung nach Anspruch 6, dadurch gekennzeichnet,
daß für einen Kunststoffkörper ( 21 ) mit der Achsrichtung ( 28 ) des Sacklochs ( 30 ) quer zur Entformungsrichtung zur Aussparung des Sacklochs eine Schieberzunge ( 29) vorgesehen ist.

8. Vorrichtung nach Anspruch 6, dadurch gekennzeichnet,
daß für einen Kunststoffkörper ( 21 ) mit einem weiteren, dritten Abschnitt ( 26 ), der über einen zweiten mehr als 45° umfassenden Bogen ( 25 ) dem ersten Bogen ( 23 ) gegenüber an den ersten Abschnitt ( 22 ) anschließt, vorzugsweise in Form eines U-förmigen Handgriffbügels, ein zweites Formteil ( 31 ) Vorgesehen ist zur Aussparung eines dritten, im dritten Abschnitt ( 26 ) gelegenen, in Form eines Sacklochs ( 32 ) ausgebildeten Hohlraums.

9. Vorrichtung nach Anspruch 8, dadurch gekennzeichnet,
daß für einen U-förmigen Handgriffbügel ( 21 ) ein beweglicher, mit zwei achsparallelen Schieberzungen (55, 56) ausgestatteter Schieber ( 52 ) zur Aussparung der beiden Sacklöcher (30, 32) vorgesehen ist.

10. Vorrichtung nach Anspruch 9, dadurch gekennzeichnet,
daß je eine Druckgaszuleitung (33, 61) zum Aufblasen des ersten Hohlraums ( 27 ) in beiden Schieberzungen (55, 56) vorgesehen ist.

11. Vorrichtung nach Anspruch 6, dadurch gekennzeichnet,
daß die Schieberzunge ( 55, 56 ) an ihrer freien Stirnseite eine Stufe ( 36 ) aufweist, in der die Druckgaszuleitung mündet.

12. Vorrichtung nach Anspruch 11, dadurch gekennzeichnet,
daß die Stufe ( 36 ) an der dem aufzublasenden Hohlraum ( 27 ) zugekehrten Seite der Schieberzunge ( 29 ) angeordnet ist.

## Claims

1. Method for injection moulding a hollow plastic body (2), in which plastic melt is driven into a ventable mould cavity (13), a hollow (4) is then blown by blowing compressed gas into the inside of the melt and the plastic body (2) is then cured and demoulded, characterized in that
- for a plastic body (2) having a first straight section (3) and a second section (6) which is adjacent thereto and is bent off over a [sic] more than 45° (degrees) a first hollow (4) is blown in the first section (3) and a second hollow, which is situated in the second section (6) and is designed in the form of a blind hole (7), is created by a shaped part (9) and the compressed gas for blowing the first hollow (4) is fed through the shaped part (9),
- when the shaped part or sliding tongue projects into the blind hole (7, 30) to be formed, the outer layer of the plastic melt is penetrated by one or in each case one compressed gas feed line (11, 33) which is mounted axially displaceably in one or both shaped parts or sliding tongues (9, 29) and can be shut off, and then compressed gas is blown in through the opened compressed gas feed line (11, 33) or lines for the purpose of blowing the first hollow (4, 27).

2. Method according to Claim 1, characterized in that
- for a plastic body (2) having the axial direction of the blind hole (7) transverse with respect to the demoulding direction, the blind hole (7) is created by a sliding tongue (9).

3. Method according to Claim 1 or 2, characterized in that
- for a plastic body having a further, third section (26), which adjoins the first section (22) via a second bend (25) which is opposite the first bend (23), preferably in the form of a U-shaped handle, a third hollow (32), which is situated in the third section (26) and is designed in the form of a blind hole, is created by a further shaped part (31).

4. Method according to Claim 3, characterized in that
- for a U-shaped handle, the two blind holes (30, 32) are created by axially parallel sliding tongues (29, 31) which can be moved jointly.

5. Method according to one of Claims 2 or 4, characterized in that
- the compressed gas for blowing the first hollow (4, 27) is fed through the two shaped parts (9, 29, 31) or sliding tongues.

6. Apparatus for injection moulding a hollow plastic body (21)
- having a ventable and openable hollow mould (20)
- having a feed line (35) for plastic melt which opens into the mould cavity of this hollow mould (20),
- having a feed line (35), which opens into this mould cavity, for compressed gas for blowing a hollow (27) in the inside of the melt, for operating according to one of the preceding method claims, characterized in that
- for a plastic body (21) having a first straight section (22) and a second section (24) which adjoins it and is bent off at a [sic] more than 45°, the compressed gas feed line (33) for a first hollow (27) opens into the first section
- a shaped part (29) for leaving open a second hollow, which is located in the second section and is designed in the form of a blind hole (30), is provided and the compressed gas line runs inside the shaped part (29),
- a pipe (33, 61), which is mounted so as to be axially moveable with respect to the sliding tongue (55, 56) in the direction of movement of the sliding tongue in question, is provided as the compressed gas feed line.

7. Apparatus according to Claim 6, characterized in that, for a plastic body (21) having the axial direction (28) of the blind hole (30) transverse with respect to the demoulding direction, a sliding tongue (29) is provided for the purpose of leaving open the blind hole.

8. Apparatus according to Claim 6, characterized in that, for a plastic body (21) having a further, third section (26), which adjoins the first section (22) via a second bend (25) comprising more than 45°, which is opposite the first bend (23), preferably in the form of a U-shaped handle, a second shaped part (31) is provided for the purpose of leaving open a third hollow, which is located in the third section (26) and is designed in the form of a blind hole (32).

9. Apparatus according to Claim 8, characterized in that, for a U-shaped handle (21), a moveable slide (52), equipped with two axially parallel sliding tongues (55, 56), is provided for the purpose of creating the two blind holes (30, 32).

10. Apparatus according to Claim 9, characterized in that a compressed gas feed line (33, 61) for blowing the first hollow (27) is provided in each of the two sliding tongues (55, 56).

11. Apparatus according to Claim 6, characterized in that the sliding tongue (55, 56) has a step (36), into which the compressed gas feed line opens, at its free end.

12. Apparatus according to Claim 11, characterized in that the step (36) is arranged on the side of the sliding tongue (36) facing the hollow (27) to be blown.

## Revendications

1. Procédé destiné au moulage par injection d'un corps creux en matière plastique (2) où la matière plastique fondue est poussée dans une cavité de moulage (13) susceptible d'être purgée alors qu'une cavité (4) est ensuite créée par soufflage en injectant du gaz comprimé à l'intérieur de la matière plastique fondue, le corps en matière plastique (2) étant alors durci et démoulé, caractérisé en ce que pour un corps en matière plastique (2) constitué d'une première partie droite (3) et d'une deuxième partie (6) raccordée à cette première partie par un arc courbé de plus de 45° une première cavité (4) est créée par soufflage dans la première partie (3) et qu'une deuxième cavité, située dans la deuxième partie (6) est réalisée sous la forme d'un trou borgne (7) grâce à une pièce de moulage (9), et en ce que le gaz comprimé est conduit à travers la pièce de moulage (9) pour créer par soufflage la première cavité (4), la couche extérieure de la matière plastique fondue est percée avec une ou à chaque fois une conduite d'amenée de gaz comprimé (11, 33) susceptible d'être déplacée axialement et logée dans une ou deux pièces de moulage ou dans des languettes coulissantes (9, 29), celles-ci faisant saillie dans le trou borgne (7, 30) à former ; du gaz comprimé est ensuite soufflé à travers la ou les conduite (s) d'amenée de gaz comprimé (11, 33) ouverte (s) pour gonfler la première cavité (4, 27).

2. Procédé selon la revendication 1, caractérisé en ce que le trou borgne (7) est formé grâce à une languette coulissante (9) pour un corps en matière plastique (2) dont la direction d'axe du trou borgne (7) est transversale à la direction de démoulage.

3. Procédé selon la revendication 1 ou 2, caractérisé en ce que pour un corps en matière plastique possédant une troisième partie (26) supplémentaire raccordée de préférence sous la forme d'une poignée recourbée en arc ayant la forme d'un U à la première partie (22) en vis-à-vis du premier arc (23) par l'intermédiaire d'un deuxième arc (25), une troisième cavité (32), située dans la troisième partie (26). et ayant la forme d'un trou borgne, est formée grâce à une pièce de moulage (31) supplémentaire.

4. Procédé selon la revendication 3, caractérisé en ce que pour une poignée recourbée en arc ayant la forme d'un U, les deux trous borgnes (30, 32) ont été formés grâce à des languettes coulissantes (29, 31) se déplaçant ensemble et parallèles à l'axe.

5. Procédé selon une des revendications 2 ou 4, caractérisé en ce que le gaz comprimé destiné à gonfler la première cavité (4, 27) est amené par les deux pièces de moulage (9, 29, 31) ou des languettes coulissantes.

6. Dispositif destiné à l'injection d'un corps creux en matière plastique (21)
- avec une cavité (20) susceptible d'être purgée et ouvrable
- avec une conduite d'amenée (35) pour la matière plastique fondue débouchant dans la cavité de moulage de cette cavité (20)
- avec une conduite d'amenée (35) pour gaz comprimé, destiné à gonfler une cavité (27) à l'intérieur de la matière fondue, débouchant dans cette cavité, ceci afin de procéder à la réalisation selon une des revendications précedemment citées, caractérisé en ce que pour un corps en matière plastique (21) doté d'une première partie droite (22) et d'une seconde partie (24) raccordée à cette première partie par un arc courbé de plus de 45°, la conduite d'amenée de gaz comprimé (33) pour une première cavité (27) débouche dans la première partie, et en ce qu'une pièce de moulage (29) est prévue sous la forme d'une cavité en forme d'un trou borgne (30) pour former une deuxième cavité située dans la deuxième partie, et en ce que la conduite de gaz comprimé s'étend à l'intérieur de la pièce de moulage (29), et
caractérisé en ce qu'il est prévu un tube (33, 61) comme conduite d'amenée de gaz comprimé disposé de manière à pouvoir être déplacé axialement par rapport à la languette coulissante en direction de la mobilité de la languette coulissante concernée (55, 56).

7. Dispositif selon la revendication 6, caractérisé en ce que pour un corps en matière plastique (21), il est prévu une languette coulissante (29) destinée à former le trou borgne (30) et placée de façon transversale par rapport à la direction de démoulage et à la direction de l'axe (28).

8. Dispositif selon la revendication 6, caractérisé en ce que pour un corps en matière plastique (21) avec une troisième partie (26) supplémentaire raccordée de préférence sous la forme d'une poignée recourbée en arc ayant la forme d'un U à la première partie (22) en vis-à-vis du premier arc (23) par l'intermédiaire d'un deuxième arc (25), courbé de plus de 45°, une deuxième pièce de moulage (31) est prévue pour former une troisième cavité située dans la troisième partie (26) et ayant la forme d'un trou borgne (32).

9. Dispositif selon la revendication 8, caractérisé en ce qu'il est prévu pour une poignée recourbée en arc ayant la forme d'un U (21), une coulisse (52) mobile constituée de deux languettes coulissantes (55, 56) parallèles à l'axe et destinées à former les deux trous borgnes (30,32).

10. Procédé selon la revendication 9, caractérisé en ce qu'il est prévu à chaque fois une conduite d'amenée de gaz comprimé (33, 61) destinée à gonfler la première cavité (27) dans les deux languettes coulissantes (55, 56).

11. Procédé selon la revendication 6, caractérisé en ce que la languette coulissante (55, 66) comporte sur son côté frontal libre, un gradin (36) dans lequel la conduite d'amenée de gaz comprimé débouche.

12. Procédé selon la revendication 11, caractérisé en ce que le gradin (36) est disposé sur le côté de la languette coulissante (29) tourné vers la cavité devant être gonflée. (27).
